# EUROPEAN PATENT APPLICATION

(11) **EP 2 626 981 A1**
(43) Date of publication of application: **14.08.2013**
(21) Application number: 11830378.3
(22) Date of filing: 05.10.2011
(51) Int. Cl.: H02K 5/173, F16C 35/02, F16C 35/063, F16C 35/067, F16N 7/14, F16N 7/36

(54) **ECCENTRIC ROTATION DRIVE DEVICE**

(30) Priority: 06.10.2010 JP 2010226262
(71) Applicant: ULVAC, Inc., Chigasaki-shi, Kanagawa 253-8543 (JP)
(72) Inventor: KANKE, Yukio, Chigasaki-shi Kanagawa 253-8543 (JP); SHIBAYAMA, Koji, Chigasaki-shi Kanagawa 253-8543 (JP)
(74) Representative: Markfort, Iris-Anne Lucie
(86) International application number: PCT/JP2011/005610
(87) International publication number: WO 2012/046444

(57) **Abstract**

[Object] To provide an eccentric circling drive device that is capable of performing appropriate lubrication and cooling by means of a processing liquid while preventing energy loss and damage to members due to friction.

[Solving Means] A circling shaft 13 of an eccentric circling drive device 100 includes therewithin a flow path 131 that causes the flow of a lubricating oil F. The flow path 131 includes a thrust flow path 131a formed along an axial direction and a radial flow path 131b that extends along a radial direction of the circling shaft 13 from the thrust flow path 131a. An end portion of the radial flow path 131b is connected to a bearing 15. With such a configuration of the flow path 131, the lubricating oil F can be introduced from the end portion 13b of the circling shaft 13 into the bearing 15 by means of the circling motion of the circling shaft 13.

## Description

### Technical Field

The present invention relates to an eccentric circling drive device that is applied to fluid machinery or the like such as a pump and a compressor.

### Background Art

The eccentric circling drive device includes a mechanism including an eccentric circling shaft, and is applied to, for example, a vacuum pump such as a scroll pump and a piston pump, or another apparatus that pivots.

The eccentric circling drive device described in Patent Document 1 includes an eccentric circling shaft in a rotation shaft mounted on a rotor (e.g., see paragraph [0006] of the specification of Patent Document 1). It should be noted that the eccentric circling drive device includes an Oldham ring as a mechanism to prevent the circling shaft from rotating.

In the eccentric circling drive device described in Patent Document 2, a rectangle moving plate is mounted on an end portion of a circling shaft eccentrically provided in a rotation shaft, and the moving plate moves in one direction along with the circling motion of the circling shaft. That is, the moving plate has a function to prevent the circling shaft to rotating. Moreover, the eccentric circling drive device can use, as a pumping action, the motion of the moving plate serving as such a rotation preventing means, and supply, to a driven apparatus, a lubricating liquid held in a lower portion of a casing through a flow path (not shown) in the rotation shaft (e.g., see paragraphs [0007] and [0008] of the specification of Patent Document 2).

### Citation List

### Patent Document

Patent Document 1: Japanese Patent No. 3558572
Patent Document 2: Japanese Patent No. 3697434

### Disclosure of the Invention

### Problem to be solved by the Invention

The eccentric circling drive device described in Patent Document 1 does not include the lubricating oil supplying mechanism, as disclosed in, for example, Patent Document 2. In a case where the eccentric circling drive device does not include the supplying mechanism, only lubrication by means of grease or the like is performed. Grease lubrication has a shorter life-span and lower cooling performance than oil lubrication.

In the eccentric circling drive device described in Patent Document 2, a moving plate having heavy weight slides with respect to a support member provided therearound, which causes great energy loss due to friction or inertia thereof. Moreover, the device converts the rotational motion of a rotation shaft (circling motion of a circling shaft) into the linear motion of a moving plate, which applies a heavy load such as inertial force and impulsive force on the moving plate, the support member, or the rotation shaft. Thus, there is a problem that the members are easy to be damaged.

In view of the circumstances as described above, it is an object of the present invention to provide an eccentric circling drive device that is capable of performing appropriate lubrication and cooling by means of a processing liquid while preventing energy loss and damage to members due to friction.

### Means for solving the Problem

In order to achieve the above-mentioned object, an eccentric circling drive device according to an embodiment of the present invention includes a rotation shaft, a casing, a containing area, a bearing, and a circling shaft.
The rotation shaft has an eccentric through hole.
The casing rotatably houses the rotation shaft.
The containing area is provided in the casing and is capable of containing a processing liquid.
The bearing is provided in the through hole of the rotation shaft.
The circling shaft is rotatably supported by the bearing. Moreover, the circling shaft includes an end portion and a flow path, the end portion being arranged in the containing area, the flow path introducing the processing liquid in the containing area from the end portion into the bearing by means of circling motion.

An eccentric circling drive device according to another embodiment of the present invention includes a rotation shaft, a casing, a containing area, a bearing, a circling plate, and a circling shaft.
The rotation shaft has an eccentric through hole. The casing rotatably houses the rotation shaft. The containing area is provided in the casing and is capable of containing a processing liquid.
The bearing is provided in the through hole of the rotation shaft.
The circling plate is arranged so that a part of the circling plate is soaked in the processing liquid contained in the containing area at least during circling, and is capable of scattering the processing liquid by means of circling motion.
The circling shaft includes an introduction port for the processing liquid and a flow path, and is rotatably supported by the bearing, the introduction port for the processing liquid being provided at a position at which the processing liquid scattered by means of circling motion of the circling plate is able to be attached, the flow path communicating between the introduction port and the bearing, the circling plate being connected to the circling shaft.

### Brief Description of Drawings

[Fig. 1] Fig. 1 is a schematic cross-sectional view showing an eccentric circling drive device as an eccentric circling drive device according to a first embodiment of the present invention.
[Fig. 2] Fig. 2 is a diagram of a rotation shaft of the eccentric circling drive device when viewed in an axial direction.
[Fig. 3] Fig. 3 is a cross-sectional view showing a circling shaft according to a second embodiment of the present invention.
[Fig. 4] Fig. 4 is a cross-sectional view showing a circling shaft according to a third embodiment of the present invention.
[Fig. 5] Fig. 5 is a cross-sectional view showing a circling shaft and proximity of a containing area according to a fourth embodiment of the present invention.
[Fig. 6] Fig. 6 is a cross-sectional view showing an eccentric circling drive device according to a fifth embodiment of the present invention.
[Fig. 7] Figs 7A to 7C are diagrams showing various forms of an introduction flow path provided on an introduction assisting unit.

### Best Mode(s) for Carrying Out the Invention

An eccentric circling drive device according to an embodiment includes a rotation shaft, a casing, a containing area, a bearing, and a circling shaft.
The rotation shaft has an eccentric through hole. The casing rotatably houses the rotation shaft. The containing area is provided in the casing and is capable of containing a processing liquid.
The bearing is provided in the through hole of the rotation shaft.
The circling shaft is rotatably supported by the bearing. Moreover, the circling shaft includes an end portion and a flow path, the end portion being arranged in the containing area, the flow path introducing the processing liquid in the containing area from the end portion into the bearing by means of circling motion.

The circling shaft circles, which exerts centrifugal force on the processing liquid in the flow path in an end portion of the circling shaft. This acts as pumping force, with the result that the processing liquid is supplied to the bearing. Accordingly, there is no need to provide a separate pump mechanism such as a moving plate in related art. Therefore, it is possible to perform appropriate lubrication and cooling by means of a processing liquid while preventing energy loss and damage to members due to friction.

The flow path may have an expanded portion formed so that a flow path cross-sectional area is increased with distance from the end portion. Accordingly, the centrifugal force exerted on the processing liquid is increased with distance from the area in which the processing area is contained, with the result that the pumping force on the processing liquid can be increased.

The expanded portion may be formed in a stepped shape. Accordingly, the expanded portion can be easily processed when manufacturing the circling shaft. Alternatively, the expanded portion may be formed in a tapered shape.

The circling shaft may include an introduction assisting unit that is provided in the end portion and assists the introduction of the processing liquid into the flow path.

For example, the introduction assisting unit may include an introduction flow path functioning as the expanded portion. Alternatively, the introduction assisting unit may include an introduction flow path formed in a screw groove shape or a screw flow path shape. Accordingly, the action of high centrifugal force caused by the expanded portion or suction action caused by the shape of the screw is generated, and therefore the processing liquid can be reliably introduced into the flow path.

The flow path may include a through portion passing through the circling shaft in an axial direction. Accordingly, it is possible to supply the processing liquid, through the through portion, to a driven apparatus or the like to be connected to an end portion of the circling shaft (end portion opposite to the end portion arranged in the area).

The eccentric circling drive device may further include a rotation control mechanism that is provided on an end portion side of the circling shaft and controls rotation of the circling shaft. According to such a configuration, it is possible to supply the processing liquid to the rotation control mechanism by scattering the processing liquid in the area when the circling shaft circles. Accordingly, it is possible to perform lubrication and cooling of the rotation control mechanism by means of the circling motion of the circling shaft.

Hereinafter, embodiments of the present invention will be described with reference to the drawings.

### [First Embodiment]

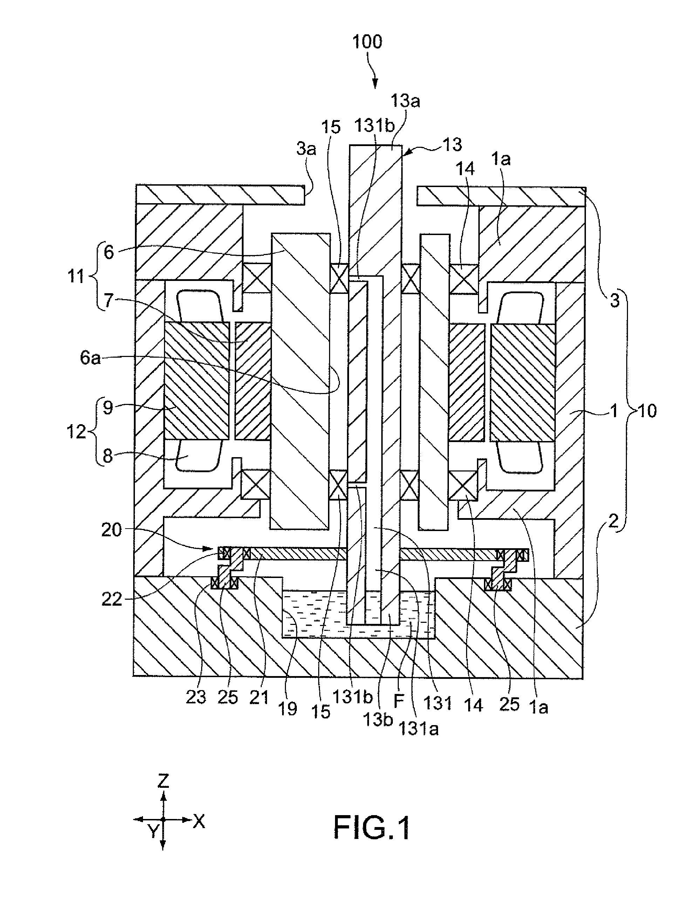

Fig. 1 is a schematic cross-sectional view showing an eccentric circling drive device according to a first embodiment of the present invention. The eccentric circling drive device is used as, for example, a driving source of a pump (e.g., vacuum pump), a compressor, or another apparatus.

An eccentric circling drive device 100 includes a casing 10, a rotor 11 provided in the casing 10, and a stator 12 that is arranged around the rotor 11 and is mounted on the casing 10.

The casing 10 includes a main body 1 shaped like a cylinder, and covers 2 and 3 attached to the openings at both ends of the main body 1.

The rotor 11 includes a rotation shaft 6, and a rotor core 7 provided around the rotation shaft 6. The rotation shaft 6 is roratably supported by a bearing 14 mounted on a bearing mounting portion 1a of the main body 1 of the casing 10. The stator 12 includes a coil 8 and a stator core 9.

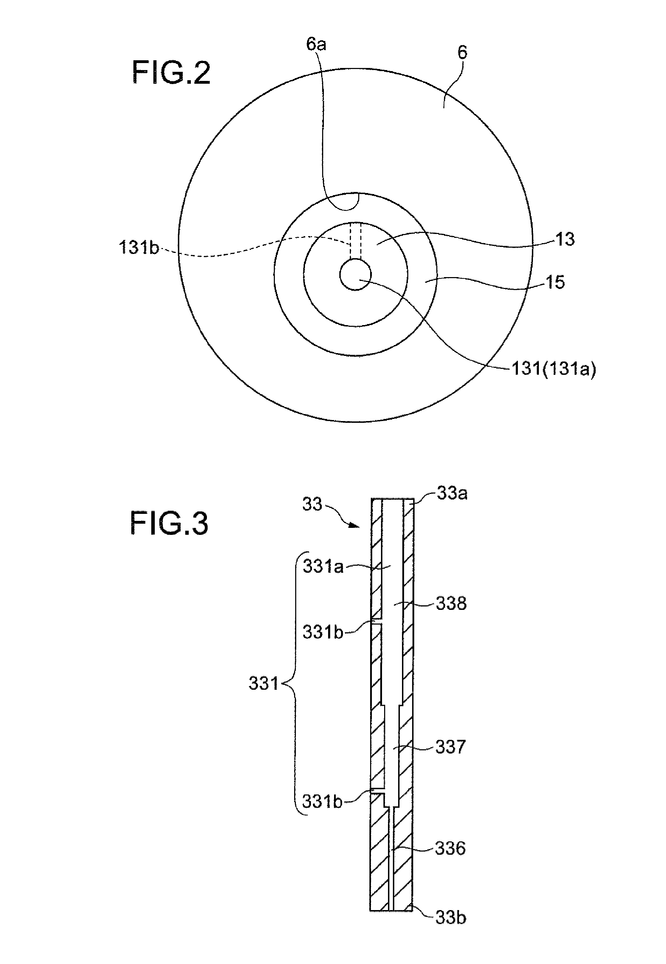

Fig. 2 is a diagram of the rotation shaft 6 of the eccentric circling drive device when viewed in an axial direction (Z-axis direction). At an eccentric position from the shaft center of the rotation shaft 6, a through hole 6a is formed, and in the through hole 6a, a bearing 15 that rotatably supports a circling shaft 13 is provided.

On the cover 3 being one of the two covers 2 and 3 of the casing 10, a hole 3a is formed, and from the hole 3a, an output end portion 13a of the circling shaft 13 is exposed to the outside of the casing 10.

To the output end portion 13a of the circling shaft 13, a scroll mechanism, a piston mechanism, a diaphragm mechanism, or the like (not shown) is connected. In a case where the piston mechanism or the diaphragm mechanism is connected to the eccentric circling drive device 100, they are connected to each other through a member such as a connecting rod (not shown), and the circling motion of the circling shaft 13 is converted into the linear motion.

To a side of an end portion 13b of the circling shaft 13 opposite to the output end portion 13a, a rotation control mechanism (rotation preventing mechanism) 20 is connected. The rotation control mechanism 20 includes a circling plate 21 fixed to the circling shaft 13 and a crankpin 25 connected between the circling plate 21 and the casing 10 (cover 2). The circling plate 21 has, for example, a circular plate shape, and the circling shaft 13 is fixed to the center position thereof. The circling plate 21 may have a shape other than a circular plate shape. The circling shaft 13 may be fixed to a position deviated from the center position of the circling plate 21.

An end portion of the crankpin 25 is rotatably connected to the circling plate 21 through the bearing 22, and the other end portion of the crankpin 25 is rotatably connected to the inner surface of the cover 2 through the bearing 23. A plurality of crankpins 25 are provided, but one crankpin 25 may be provided.

On the cover 2 as a part of the casing 10, a containing area 19 that contains a lubricating oil F as a processing liquid is provided. For example, on the cover 2 that has a plate shape and has a larger thickness than the cover 3, a concave portion is formed, with the result that the containing area 19 is provided. In this embodiment, the eccentric circling drive device 100 is used in a position in which axial directions of the rotation shaft 6 and the circling shaft 13 are arranged in a substantially vertical direction. Therefore, the lubricating oil F is stored in the containing area 19 that opens into the side of the rotation shaft 6 and the circling shaft 13.

The circling shaft 13 is arranged at a position at which the end portion 13b thereof is arranged in the containing area 19 and is soaked in the lubricating oil F.

The circling shaft 13 includes therewithin a flow path 131 that causes the flow of the lubricating oil F. The flow path 131 includes a thrust flow path 131a formed along an axial direction and a radial flow path 131b that extends along a radial direction of the circling shaft 13 from the thrust flow path 131a. An end portion of the radial flow path 131b is connected to the bearing 15. With such a configuration of the flow path 131, the lubricating oil F can be introduced from the end portion 13b of the circling shaft 13 into the bearing 15.

The operation of the eccentric circling drive device 100 configured as described above will be described.

The rotor 11 rotates by the electromagnetic mutual action of the stator 12 and the rotor 11. When the rotor 11 rotates, the circling shaft 13 circles around the center of the rotation shaft 6 thereof. At this time, the rotation control mechanism 20 causes the circling shaft 13 and the circling plate 21 to integrally circling, thereby controlling the rotation of the circling shaft 13. The power of the circling motion is a power source of a pump, a compressor, or another apparatus.

Moreover, when the circling shaft 13 circles around the center of the rotation shaft 6, centrifugal force is exerted on the lubricating oil F in the flow path 131 in the end portion 13b of the circling shaft 13 by means of the circling motion. Then, the lubricating oil F in the flow path 131 receives the drag force from a wall surface in the flow path 131, which acts as pumping force, and the lubricating oil F is introduced into a side that has low resistance, i.e., the upper side of the flow path 131. In this way, the lubricating oil F is sucked in the flow path 131,
passes through the thrust flow path 131a and the radial flow path 131b, and thus a sufficient amount of the lubricating oil F is supplied to the bearing 15. Accordingly, it is possible to cool the circling shaft 13 and the bearing 15 and perform lubrication of the bearing 15.

As described above, in this embodiment, there is no need to provide a separate pump mechanism such as a moving plate having heavy weight in related art. Therefore, it is possible to perform appropriate lubrication and cooling by means of the lubricating oil F while preventing energy loss and damage to members due to friction.

In this embodiment, when the circling shaft 13 circles, a lubricating oil in the containing area 19 can be scattered. Accordingly, it is possible to supply the lubricating oil F to, for example, the bearings 22 and 23 of the crankpin 25 of the rotation control mechanism 20, and perform lubrication and cooling of them.

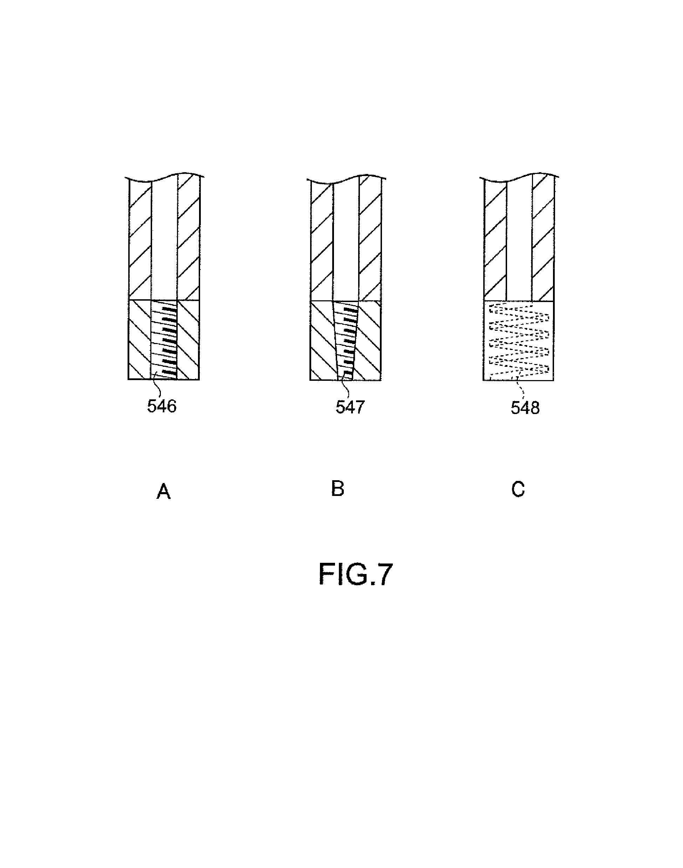

It should be noted that in a case where the pumping force on the lubricating oil F is weak by means of only centrifugal force, the thrust flow path 131a may be processed to have low flow path resistance. As the process to make the flow path resistance low, for example, water-repellent processing is applied to at least a wall surface in the thrust flow path 131a, or a plurality of grooves along an axial direction are formed on a wall surface of the thrust flow path 131a. Alternatively, instead of the plurality of grooves along an axial direction, a screw groove having a shape as shown in Figs. 7A and 7B, which will be described later, may be formed on a wall surface in the flow path 131. Alternatively, instead of the thrust flow path 131a, a screw flow path having a shape as shown in Fig. 7C, which will be described later, may be provided.

### [Second Embodiment]

Fig. 3 is a cross-sectional view showing a circling shaft 33 according to a second embodiment of the present invention. In the following description, descriptions of the same members, functions, and the like as those included in the eccentric circling drive device 100 according to the embodiments shown in Fig. 1 and the like will be simplified or omitted, and different points will be mainly described.

A thrust flow path 331a of a flow path 331 provided in the circling shaft 33 is formed so that the flow path cross-sectional area thereof is increased in a stepwise manner with distance from a side of an end portion 33b being a side of the containing area 19 (see Fig. 1). That is, the thrust flow path 331a of the flow path 331 functions as an expanded portion. For example, the thrust flow path 331a includes a first flow path 336, a second flow path 337, and a third flow path 338 in order of increasing flow path cross-sectional area. Moreover, the thrust flow path 331a passes through from the end portion 33b to an output end portion 33a, and functions as a through portion.

A radial flow path 331b is provided by branching off from the second flow path 337, and another radial flow path 331b is provided by branching off from the third flow path 338.

The inner diameter of the third flow path 338 of the thrust flow path 331a is about two to five times that of the first flow path 336. However, the inner diameter of the flow paths is not limited to the range, and can be changed as appropriate.

The ratio of the length of the first, second, and third flow paths 336, 337, and 338 in an axial direction is about 1:1:2. However, the ratio may be 1:1:1, and, in addition, can be changed as appropriate.

According to the thrust flow path 331a configured as described above, it is possible to increase the pumping force on a lubricating oil, because centrifugal force (=mrω2) exerted on the lubricating oil is increased with distance from the end portion 33b at a constant circling speed of the circling shaft 33.

Moreover, it is possible to supply a lubricating oil to also a machine of a drive apparatus (not shown) connected to the output end portion 33a, because the thrust flow path 331a passes through in an axial direction.

Further, in this embodiment, the thrust flow path 331a can be easily processed when manufacturing the circling shaft 33, because the thrust flow path 331a is formed to expand in a stepwise manner. That is, in this example, it is possible to easily form the thrust flow path 331a by applying a drilling process with a drill having three stages of thickness to form the flow paths 336, 337, and 338 having three stages of inner diameter.

It should be noted that in this embodiment, the thrust flow path of the circling shaft 33 has three stages of flow path cross-sectional area, but it may have two stages or four stages or more.

### [Third Embodiment]

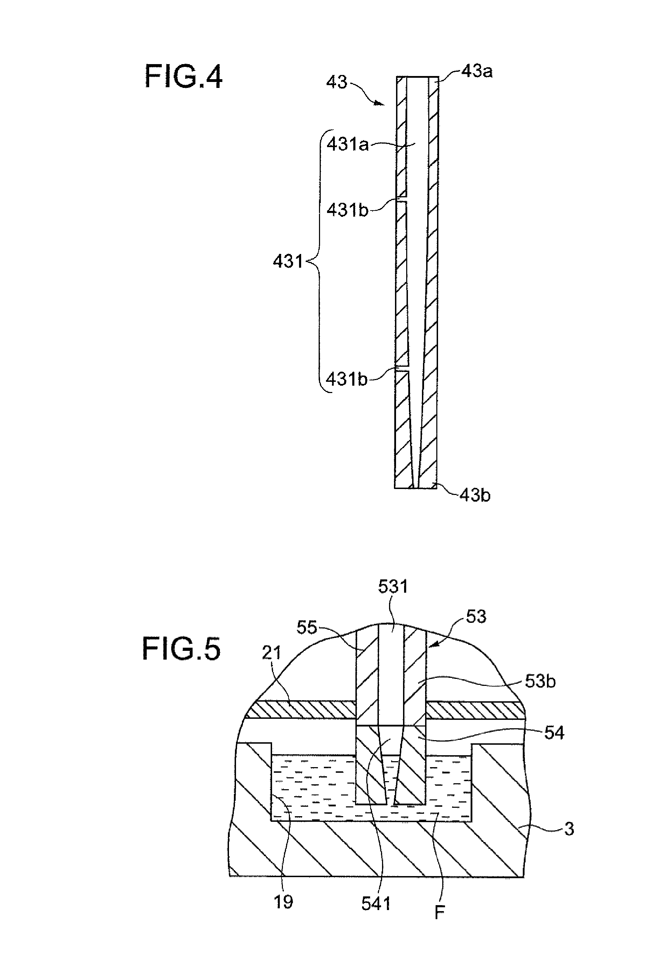

Fig. 4 is a cross-sectional view showing a circling shaft according to a third embodiment of the present invention.

A thrust flow path 431a of a circling shaft 43 is formed in a tapered shape, i.e., continuously expands with distance from an end portion 43b. From the thrust flow path 431a, a radial flow path 431b extends. In the tapered shape of the thrust flow path 431a, the line between a wall surface of the thrust flow path 431a and the space is formed in a curved shape when viewed in cross-section, as shown in Fig. 4. However, it may be formed in a linear shape.

Also the thrust flow path 431a configured as described above can increase centrifugal force, similarly to the second embodiment. Therefore, it is possible to increase the pumping force on a lubricating oil. Moreover, it is possible to supply a processing liquid to also a machine of a driven apparatus (not shown) connected to an output end portion 43a, because the thrust flow path 431a passes through in an axial direction.

### [Fourth Embodiment]

Fig. 5 is a cross-sectional view showing a circling shaft and proximity of a containing area according to a fourth embodiment of the present invention.

A circling shaft 53 according to this embodiment includes a main body 55, and an introduction assisting unit 54 connected to and fixed to an end portion 53b of the main body 55. The introduction assisting unit 54 is a member that assists the introduction of the lubricating oil F into a flow path 531. The introduction assisting unit 54 is arranged in the containing area 19, and a part (or all) of the introduction assisting unit 54 is soaked in the lubricating oil F.

The introduction assisting unit 54 has the substantially same outer diameter as the main body 55, for example, and is formed to be shaped like a cylinder. Moreover, in the introduction assisting unit 54, an introduction flow path 541 that functions as an expanded portion is formed, and the introduction assisting unit 54 is communicated with the flow path (thrust flow path) 531 formed in the main body 55. The flow path 531 of the main body 55 has the substantially same shape as the flow path 131 (thrust flow path 131a) of the circling shaft 13, as shown in Fig. 1, for example.

If the introduction flow path 541 that functions as an expanded portion is provided on at least an end portion of the circling shaft 53 as described above, centrifugal force greater than that of the first to third embodiments described above is exerted on the lubricating oil F in the introduction flow path 541 in the introduction assisting unit 54. Accordingly, it is possible to reliably introduce the lubricating oil F into the flow path 531 of the main body 55.

In this embodiment, although the introduction assisting unit 54 has been described as a different member from the main body 55, these may be the same member and the introduction flow path 541 may be formed in an end portion of the circling shaft 53.

It should be noted that in the example(s) shown in Fig. 4 (and Fig. 1), the liquid level of the lubricating oil F contained in the containing area 19 corresponds to that of the lubricating oil F in the flow path in the end portion of the circling shaft. However, depending on the inner diameter of the flow path in the end portion of the circling shaft, the lubricating oil F is not introduced into the flow path in the end portion of the circling shaft due to atmospheric pressure in the flow path in some cases only by storing the lubricating oil F in the containing area 19. Even in such a case, if the circling shaft starts the circling motion, the lubricating oil F is sucked into the flow path from the end portion.

### [Fifth Embodiment]

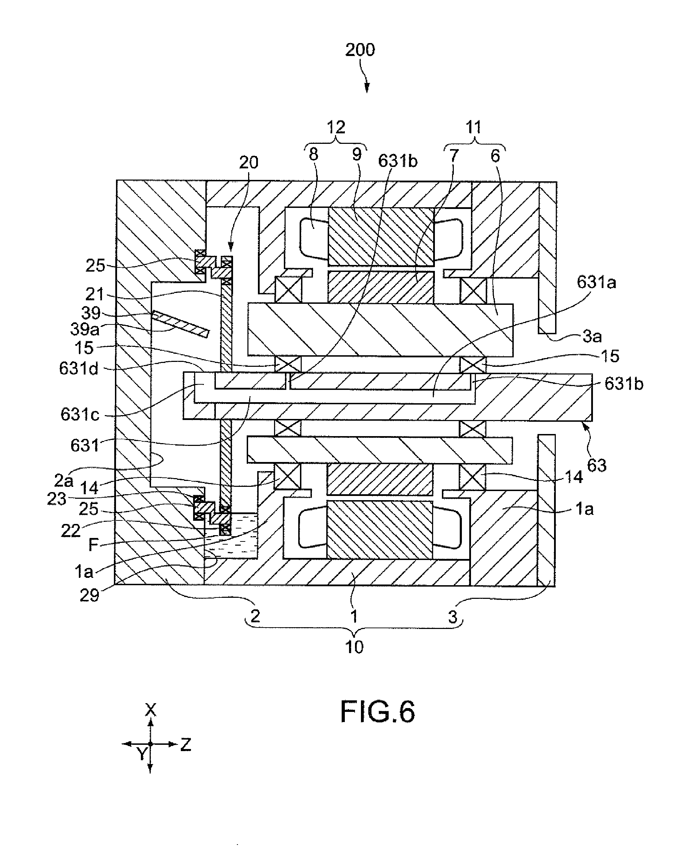

Fig. 6 is a cross-sectional view showing an eccentric circling drive device according to a fifth embodiment of the present invention.

An eccentric circling drive device 200 according to this embodiment is used in a position in which a circling shaft 63 and the rotation shaft 6 are arranged along a horizontal direction or a direction close to this. A containing area 29 for the lubricating oil F is provided on the lower side of the main body 1, i.e., between the bearing mounting portion 1a and the cover 2, in this example. A part, i.e., a lower portion side of the circling plate 21 of the rotation control mechanism 20 mounted on the circling shaft 63 is arranged in the containing area 29 and soaked in the lubricating oil F.

The containing area 29 may be formed into any shape as long as it has an arrangement and a configuration in which a part of the circling plate 21 on the lower side of the main body 1 is soaked at least during driving of the eccentric circling drive device 200.

A flow path 631 formed in the circling shaft 63 includes a radial introduction path 631c. The radial introduction path 631c is formed in a radial direction, and introduces the lubricating oil F into a thrust flow path 631a. In the radial introduction path 631c, an introduction port 631d opened into the upper side is formed. The introduction port 631d is provided at a position at which the lubricating oil F scattered by the circling motion of the circling plate 21 can be attached, typically, an end portion of the circling shaft 63.

The rotation of the circling shaft 63 is controlled by the rotation control mechanism 20, as described above, and the position of the circling shaft 63 is almost maintained even during driving of the eccentric circling drive device 200. Therefore, in the position of the eccentric circling drive device 200 as shown in Fig. 6, the direction of the opening of the introduction port 631d is an upward direction, which is almost constant.

On the cover 2, a guide member 39 is mounted. For example, a concave portion 2a is formed on the cover 2, and the guide member 39 is arranged in the concave portion 2a. The guide member 39 has a function to introduce the scattered lubricating oil F into the introduction port 631d of the circling shaft 63, as will be described later. The guide member 39 may be formed in a linear shape when viewed in a direction along the circling shaft 63, or may be formed in a curved shape (e.g., arc shape, elliptical arc shape) such as a gutter shape and an eave shape. A lower surface 39a of the guide member 39 is provided so that it is located on the lower side as it approaches the introduction port 631d. It should be noted that the concave portion 2a may have the same configuration as a concave portion that forms the containing area 19 in the above-mentioned embodiments.

The circling shaft 63 circles during driving of the eccentric circling drive device 200, and the circling plate 21 circles along with this. The circling plate 21 circles and moves, which generates an action to agitate the lubricating oil F, and the lubricating oil F in the containing area 29 is scattered. Accordingly, a part of the scattered lubricating oil F is attached to the lower surface 39a of the guide member 39, and the lubricating oil F attached to the lower surface 39a flows down the lower surface 39a by the gravity component and is introduced into the introduction port 631d. Then, the lubricating oil F flows into the thrust flow path 631a of the circling shaft 63 through the radial introduction path 631c of the circling shaft 63. On the lubricating oil F in the thrust flow path 631a, centrifugal force is exerted by means of circling of the circling shaft 63, with the result that the lubricating oil F reaches the bearing 15 through a radial flow path 631b.

It should be noted that when the circling plate 21 is located at the highest position during driving of the eccentric circling drive device 200, the lower portion side of the circling plate 21 does not necessarily have to be arranged in the containing area 29 (soaked in the lubricating oil F).

As described above, even if the eccentric circling drive device 200 is arranged so that the circling shaft 63 is arranged along a horizontal direction or a direction close to this, it is possible to supply the lubricating oil F to the bearing 15 by means of the circling shaft 63 and the circling plate 21 according to this embodiment. Moreover, the crankpin 25 arranged on the lower side and the bearing 22 supporting the crankpin 25 are supplied with a sufficient amount of the lubricating oil F, because these members are arranged in the containing area 29. Moreover, also to the bearing 23, the lubricating oil F is sufficiently supplied.

### [Other Embodiments]

Embodiments according to the present invention are not limited to the above-mentioned embodiments, and other various embodiments are implemented.

Also in the circling shafts 33 and 43 shown in Fig. 3 and Fig. 4, respectively, water-repellent processing may be performed on, or a process of a groove in an axial direction, a screw groove, a screw flow path, or the like may be applied to a wall surface in a flow path, as described above. As the shape of the screw groove or the screw flow path, there is a shape shown in Figs. 7A to 7C, which will be described later.

The thrust flow path 131a of the circling shaft 13 shown in Fig. 1 may pass through the circling shaft 13.

The introduction assisting unit 54 shown in Fig. 5 may be connected and fixed to the end portion of the respective circling shafts shown in Figs. 1, 3, and 4, or the introduction flow path 541 may be formed as the flow path of the end portion of the respective circling shafts.

In the above-mentioned embodiment, the introduction flow path 541 of the introduction assisting unit 54 is formed in a tapered shape, i.e., formed as an expanded portion. However, the introduction flow path may be formed in a screw groove shape, or a screw flaw path shape. The concept of the shape of the "screw groove" typically includes those shown in Figs. 7a and 7B. In an introduction flow path 546 shown in Fig. 7A, a screw groove is formed. In an introduction flow path 547 shown in Fig. 7B, a screw groove is formed in a flow path that expands toward the center of the axial direction of a circling shaft.
Alternatively, as shown in Fig. 7C, an introduction flow path 548 may be formed in a screw flow path shape (flow path having a spiral shape). Alternatively, the flow path having a spiral shape shown in Fig. 7C may be formed so that the entire width (width in a direction perpendicular to an axial direction) thereof expands toward the center of the axial direction.

In the above-mentioned first embodiment, the rotation control mechanism 20 is provided. However, the rotation control mechanism 20 does not have to be provided, and the circling shaft 13 may be rotatably provided with respect to the rotation shaft 6.

In the above-mentioned embodiment, the containing area 19 is formed on the cover 2. However, a case or the like (not shown) that is capable of containing the lubricating oil F may be placed in the casing 10.

In the embodiment shown in Fig. 6, it does not have to provide the guide member 39. In this case, when a lubricating oil scattered above the circling shaft 63 during driving falls naturally under gravity, the lubricating oil is attached to the introduction port 631d or the proximity of the introduction port 631d, and is introduced into the flow channel 631. Moreover, in this case, the introduction port 631d may be arranged between the circling plate 21 and the rotation shaft 6 in a Z-axis direction.

In the embodiment shown in Fig. 6, as a part of the rotation control mechanism 20, the circling plate 21 is provided. However, a circling plate may be provided not to control the rotation but to scatter the lubricating oil F. In this case, there is no need to provide the crankpin 25 and the like, and the shape of the circling plate can be variously changed.
In the embodiment shown in Fig. 6, the radial flow path 631b is formed so as to extend upward from the thrust flow path 631a. However, the radial flow path 631b may be formed so as to extend downward from the thrust flow path 631a. Accordingly, the lubricating oil F introduced into the thrust flow path 631a easily flows into the radial flow path 631b that extends downward by its own weight.

### Description of Symbols

- F: lubricating oil
- 6: rotation shaft
- 6a: through hole
- 10: casing
- 13, 33, 43, 53: circling shaft
- 13a: output end portion
- 13b, 33b, 43b, 53b: end portion
- 14, 15: bearing
- 15: bearing
- 19: containing area
- 20: rotation control mechanism
- 54: introduction assisting unit
- 100: eccentric circling drive device
- 131, 331, 431, 531: flow path
- 541: introduction flow path

## Claims

1. An eccentric circling drive device, comprising:
a rotation shaft having an eccentric through hole;
a casing rotatably housing the rotation shaft;
a containing area capable of containing a processing liquid, the containing area being provided in the casing;
a bearing provided in the through hole of the rotation shaft; and
a circling shaft rotatably supported by the bearing, the circling shaft including an end portion and a flow path, the end portion being arranged in the containing area, the flow path introducing the processing liquid in the containing area from the end portion to the bearing by means of circling motion.

2. The eccentric circling drive device according to claim 1, wherein
the flow path has an expanded portion formed so that a flow path cross-sectional area is increased with distance from the end portion.

3. The eccentric circling drive device according to claim 2, wherein
the expanded portion is formed in a stepped shape.

4. The eccentric circling drive device according to claim 2, wherein
the expanded portion is formed in a tapered shape.

5. The eccentric circling drive device according to any one of claims 2 to 4, wherein
the circling shaft includes an introduction assisting unit assisting introduction of the processing liquid into the flow path, the introduction assisting unit being provided in the end portion.

6. The eccentric circling drive device according to claim 5, wherein
the introduction assisting unit includes an introduction flow path functioning as the expanded portion.

7. The eccentric circling drive device according to claim 5, wherein
the introduction assisting unit includes an introduction flow path formed in a screw groove shape or a screw flow path shape.

8. The eccentric circling drive device according to any one of claims 1 to 7, wherein
the flow path includes a through portion passing through the circling shaft in an axial direction.

9. The eccentric circling drive device according to any one of claims 1 to 8, further comprising
a rotation control mechanism controlling rotation of the circling shaft, the rotation control mechanism being provided on an end portion side of the circling shaft.

10. An eccentric circling drive device, comprising:
a rotation shaft having an eccentric through hole;
a casing rotatably housing the rotation shaft;
a containing area capable of containing a processing liquid, the containing area being provided in the casing;
a bearing provided in the through hole of the rotation shaft;
a circling plate capable of scattering the processing liquid by means of circling motion, the circling plate being arranged so that a part of the circling plate is soaked in the processing liquid contained in the containing area at least during circling; and
a circling shaft including an introduction port for the processing liquid and a flow path, the introduction port for the processing liquid being provided at a position at which the processing liquid scattered by means of circling motion of the circling plate is able to be attached, the flow path communicating between the introduction port and the bearing, the circling plate being connected to the circling shaft, the circling shaft being rotatably supported by the bearing.
